# EUROPEAN PATENT SPECIFICATION

(11) **EP 2 285 029 B1**
(45) Date of publication and mention of the grant of the patent: **18.04.2018**
(21) Application number: 09838115.5
(22) Date of filing: 26.08.2009
(51) Int. Cl.: H04L 1/00, H04L 1/18, H04L 29/06

(54) **DATA TRANSMISSION METHOD, TRANSMISSION SYSTEM AND DATA TRANSMITTER**
DATENÜBERTRAGUNGSVERFAHREN, ÜBERTRAGUNGSSYSTEM UND DATENSENDER
PROCÉDÉ DE TRANSMISSION DE DONNÉES, SYSTÈME DE TRANSMISSION ET ÉMETTEUR DE DONNÉES

(30) Priority: 30.12.2008 CN 200810241133
(43) Date of publication of application: 16.02.2011
(73) Proprietor: State Grid Corporation of China (SGCC), Beijing 100031 (CN)
(72) Inventor: XIN, Yaozhong, Beijing 100031 (CN); SHANG, Xuewei, Beijing 100031 (CN); MEI, Zheng, Beijing 100031 (CN); TAO, Hongzhu, Beijing 100031 (CN); MA, Fayong, Beijing 100031 (CN); LI, Junliang, Beijing 100031 (CN); YE, Fei, Beijing 100031 (CN); JIN, Fenlan, Beijing 100031 (CN); ZHAI, Mingyu, Beijing 100031 (CN); LIU, Jinbo, Beijing 100031 (CN); GAO, Yuan, Beijing 100031 (CN); NAN, Guilin, Beijing 100031 (CN); YANG, Qiuheng, Beijing 100031 (CN)
(74) Representative: Santarelli
(86) International application number: PCT/CN2009/073526
(87) International publication number: WO 2010/081328

(56) References cited:
- EP-A1- 1 734 724
- WO-A1-2007/011116
- CN-A- 1 764 169
- CN-A- 1 858 717
- CN-A- 101 268 697
- CN-A- 101 459 492
- US-A- 5 604 895
- US-A1- 2005 138 210
- US-A1- 2005 181 787

## Description

This application claims priority to Chinese Patent Application No. 200810241133.2, filed with the Chinese Patent Office on December 30, 2008 and entitled "DATA TRANSMISSION METHOD AND SYSTEM AND DATA TRANSMISSION TERMINAL".

### Field of the Invention

The present invention relates to the field of information transmission and in particular to a data transmission method and system and a data transmission terminal applicable to power industry.

### Background of the Invention

The standard of Abstract Syntax Notation One (ANS.1) currently adopted for data transmission in various fields was proposed by International Telegraph and Telephone Consultative Committee (CCITT) as a complete set of standards to address the issue of universal coding, which relate to a protocol at the ISO presentation layer. ASN.1 is a flexible notation which describes the presentation, coding, transmission and decoding of data and which provides a set of formal, unambiguous and precise rules to describe a construction of object independent of specific computer hardware.

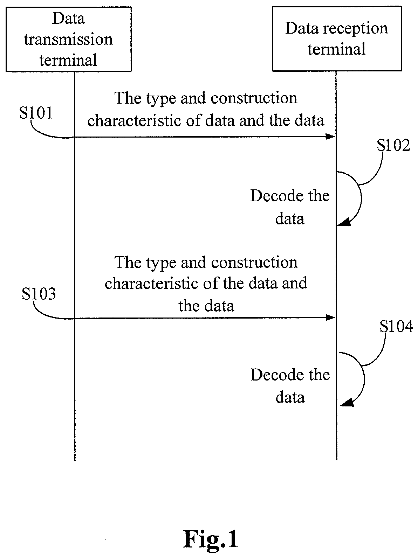

In power industry applications, a data transmission terminal analyzes the type and construction characteristic of the data, and the type and construction information of the data is transmitted during each data transmission. Fig.1 illustrates a specific transmission procedure.

Step S101. A data transmission terminal analyzes the type and construction characteristic of the data, and transmits the type and construction characteristic of the data, as descriptive information of the data, along with the data to a data reception terminal.

Step S102. The data reception terminal receives the data and the descriptive information thereof and parses the data using the descriptive information.

Step S103. The data transmission terminal continues to analyze the type and construction characteristic of the next data, and transmits the type and construction characteristic, as descriptive information, along with the next data to the data reception terminal.

Step 104: The data reception terminal receives the next data and the descriptive information thereof, and parses the next data using the descriptive information. The procedure is repeated until completion of transmitting and receiving the data.

In the foregoing data transmission procedure, the data transmission terminal has to analyze each transmitted data, acquire the type and construction information of the data and then transmit the type and construction information along with the data, and the data reception terminal has to decode each received data, which will not only increase the amount of data transmitted each time but also necessitate complex coding and decoding and hence degrade the efficiency of data transmission. In addition, patent application publication WO2007/011116A1 discloses bitstream encoding/decoding methods which enable to decode bitstreams encoded in a variety of types corresponding to a variety of standards (e.g., MPEG-1, MPEG-2, MPEG-4, and MPEG-4 AVC) by the use of the same information recognition method.

In power industry applications, a large number of substations and power plants need to exchange data, which requires real time transmission of data, but the existing transmission efficiency under ANS.1 standard can hardly meet this requirement.

### Summary of the Invention

A technical problem to be solved by the invention is to provide a data transmission method which can save communication resources, reduce the time for processing data and improve the efficiency of data transmission.

Another object of the invention is to provide a data transmission system which can save communication resources, reduce the time for processing data and improve the efficiency of data transmission.

A further object of the invention is to provide a data transmission terminal which can save communication resources, reduce the time for processing data and improve the efficiency of data transmission.

A power data transmission method according to the invention includes: upon initial transmission of data, a data transmission terminal acquiring the type and construction information of the data, and encode the type and construction information and the data for transmission to a data reception terminal, and the data reception terminal decoding the received type and construction information and the data; and upon subsequent transmission of data, the data transmission terminal encoding only the data for transmission to the data reception terminal, and the data reception terminal decoding the received data according to the type and construction information received through the initial transmission.

Preferably, the method further includes: upon a change of the type and construction of the data, the data transmission terminal acquiring the changed type and construction information, encoding the changed type and construction information and the data for transmission to the data reception terminal; and the data reception terminal decoding the received data according to the changed type and construction information.

Preferably, the data transmission terminal makes an analysis to the data construction characteristic of the data according to preset data type codes and data construction serial numbers to acquire the type and construction information of the data.

Preferably, the type and construction information includes the construction information of the data, name of transmitted argument, type and length information.

A power data transmission system according to the invention includes a data transmission terminal including a language parser, a language encoder and a data transmission unit, and a data reception terminal including a language decoder, wherein: the language parser is adapted to acquire the type and construction information of data upon initial transmission of data; the language encoder is adapted to encode the type and construction information and the data, upon initial transmission of data and encode the data upon subsequent transmission of data; the data transmission unit is adapted to transmit the encoded type and construction information and the data to the language decoder upon initial transmission of data and only transmit the data to the language decoder upon subsequent transmission of data; and the language decoder is adapted to decode the received data according to the type and construction information received through the initial transmission.

Preferably, the data transmission terminal further includes a data type and construction detection unit adapted to initiate the language parser upon a change of the type and construction of the data.

Preferably, the type and construction information includes the construction information of the data, name of transmitted argument, type and length information.

The invention further discloses a power data transmission terminal including a language parser, a language encoder and a data transmission unit, wherein: the language parser is adapted to acquire the type and construction information of data upon initial transmission of data; the language encoder is adapted to encode the type and construction information and the data upon initial transmission of data and encode the data upon subsequent transmission of data; and the data transmission unit is adapted to transmit the encoded type and construction information and the data to a data reception terminal upon initial transmission of data and only transmit the data to the data reception terminal upon subsequent transmission of data.

Preferably, the data transmission terminal further includes a data type and construction detection unit adapted to initiate the language parser upon a change of the type and construction of the data. The invention is disclosed in the appended claims.

Preferably, the type and construction information includes the construction information of the data, name of transmitted argument, type and length information.

The invention has the following advantages over the prior art:

According to the invention, at the data transmission terminal, it is unnecessary to make an analysis to acquire the type and construction information of the data in each transmission, to thereby dispense with a significant workload of data compilation, save communication resources and reduce the time for processing the data. Also, the data transmitted subsequently by the data transmission terminal does not include type and construction information of the data, causing the transmitted data packets to be relatively small, to thereby facilitate rapid and efficient transmission of the data. At the data reception terminal, it is unnecessary to parse the type and construction information of the data and decode the data according to the type and construction information each time, but instead the received data can be decoded simply according to the initially received type and construction information, to thereby dispense with a significant workload of data compilation, save communication resources and reduce the time for processing the data.

### Brief Description of the Drawings

Fig.1 is a signaling diagram of the existing data transmission method;
Fig.2 is a signaling diagram of a data transmission method according to a first embodiment of the invention;
Fig.3 is a signaling diagram of a data transmission method according to a second embodiment of the invention;
Fig.4 is a schematic structural diagram of a data transmission system according to a first embodiment of the invention;
Fig.5 is a schematic structural diagram of a data transmission system according to a second embodiment of the invention;
Fig.6 is a schematic structural diagram of a data transmission terminal according to a first embodiment of the invention; and
Fig.7 is a schematic structural diagram of a data transmission terminal according to a second embodiment of the invention.

### Detailed Description of the Invention

The invention will be further detailed below with reference to the drawings and embodiments to make the foregoing objects, features and advantages of the invention more apparent.

Message language (M language) is a language which defines a data construction and a protocol format presentation method, and this language can transmit a dynamic message, i.e., a message with a characteristic of self-explanation. The M language is not a programming language, rather, the M language only defines the construction characteristic of the transmitted data and does not define operations for processing the data. In power industry applications, frequent transmission of mass data is needed, which requires the size of data packets transmitted each time to be as small as possible and requires real time transmission with high speed. Moreover, in the power industry, a large number of substations and power plants need to exchange data with different constructions. Therefore, using M language to define the construction of transmitted data enable high-speed transmission of data and adapt to the characteristic of dynamic change of data construction.

When defining the format of data transmission by using a coding rule of M language, data types are firstly defined wherein uniquely corresponding codes are defined for different data types as depicted in Table 1, for example.

**Table 1 Codes for data types**

| Type | Serial number (decimal) | Serial number (hexadecimal) |
|---|---|---|
| Integer (int) | 1 | 01 |
| Floating point (float) | 2 | 02 |
| Floating point (double) | 3 | 03 |
| Time (time_t) | 4 | 04 |
| Character (char) | 5 | 05 |
| Enumerate (bool) | 6 | 06 |

Next, codes for data constructions are defined wherein a serial number for construction type is defined for each type of data construction to be transmitted. The codes for data types and serial numbers for data constructions defined as above are uniform at data transmission terminal and data reception terminal.

The invention uses M language to define a series of M language head constructions for encapsulating contents such as data construction, data type, etc., respectively. Data is processed by M language in two procedures: static preparation of data construction and transmission of data. In order to enable the part of data transmission without compilation, the static data construction preparation is built as contents of a dynamic library, and two interfaces are provided to return contents of a construction body and contents of attributes in the construction body. The part of data transmission is built as a static library provided to the user of the M language.

Particularly, in the part of static data construction preparation, an MP (Message Parser, parser for M language structure) is used to analyze the construction characteristic of data provided from the outside and process the construction characteristic of the data as a presentation form of the M language. The type and construction information includes the construction information of the data, name of transmitted argument, type and length information.

Particularly, in the part of data transmission, an MP data construction use interface and an M language use interface are provided, wherein the MP data construction use interface acquires the data construction and type information by an ID and acquires the type of attribute contents by an attribute name, and the M language use interface encodes the data construction and type information and the data in the M language for transmission.

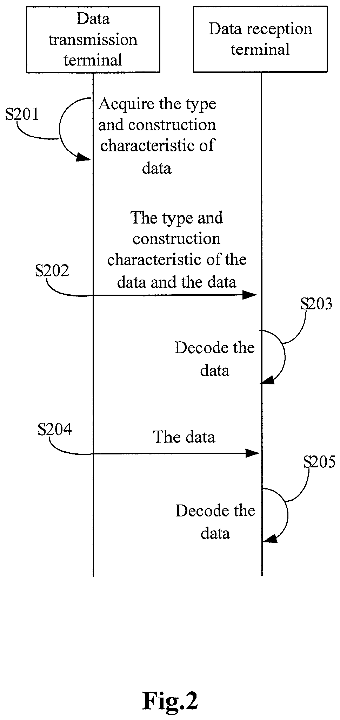

Reference is made to Fig.2 illustrating a data transmission method according to a first embodiment of the invention including the following specific steps:
Step S201. Upon initial transmission of data, a data transmission terminal acquires the type and construction information of the data. The data transmission terminal makes an analysis to acquire the type and construction information of the data through an MP.
Step S202. The data transmission terminal encodes in the M language the type and construction information and the data for transmission to a data reception terminal.
Step S203. The data reception terminal receives the type and construction information and the data, decodes the type and construction information by the M language, and decodes the data according to the type and construction information.
Step S204. Upon subsequent transmission of data, the data transmission terminal directly encodes the data in the M language for transmission to the data reception terminal without making analysis to acquire the type and construction information of the data.
Step S205. The data reception terminal decodes by the M language the received data according to the type and construction information.

In power industry applications, a batch of data transmitted between two communication sites, e.g., a power plant and a power dispatching center, a substation and a power plant, a substation and a power dispatching center, etc., tends to have the same type and construction characteristic. Therefore, the data transmission terminal can acquire the type and construction characteristic of the data and transmit the type and construction characteristic of the data to the data reception terminal only upon initial transmission of data, and directly transmit the data of the same type and construction to the data reception terminal without making analysis to the data upon subsequent transmission of data. The data reception terminal processes the subsequently received data according to the initially received type and construction information of the data.

Thus, at the data transmission terminal, it is unnecessary to make an analysis to acquire the type and construction information of the data in each transmission, to thereby dispense with a significant workload of data compilation, save communication resources and reduce the time for processing the data. Also, the data transmitted subsequently by the data transmission terminal does not include the type and construction information of the data, causing the transmitted data packets to be relatively small to thereby facilitate rapid and efficient transmission of the data. At the data reception terminal, it is unnecessary to parse the type and construction information of the data and decode the data according to the type and construction information each time, but instead the received data can be decoded simply according to the initially received type and construction information to thereby dispense with a significant workload of data compilation, save communication resources and reduce the time for processing the data.

Of course, in power industry applications, the type and construction characteristic of data transmitted between two communication sites may not be constant but may be variable sometimes. For example, the two communication sites are changed, e.g., the original communication between a power plant and a power dispatching center is changed to communication between the power plant and a substation. When the type and construction characteristic of the data are changed, the data transmission terminal re-acquires the type and construction characteristic of the data for transmission to the data reception terminal, and the data reception terminal processes the data according to the newly received type and construction information.

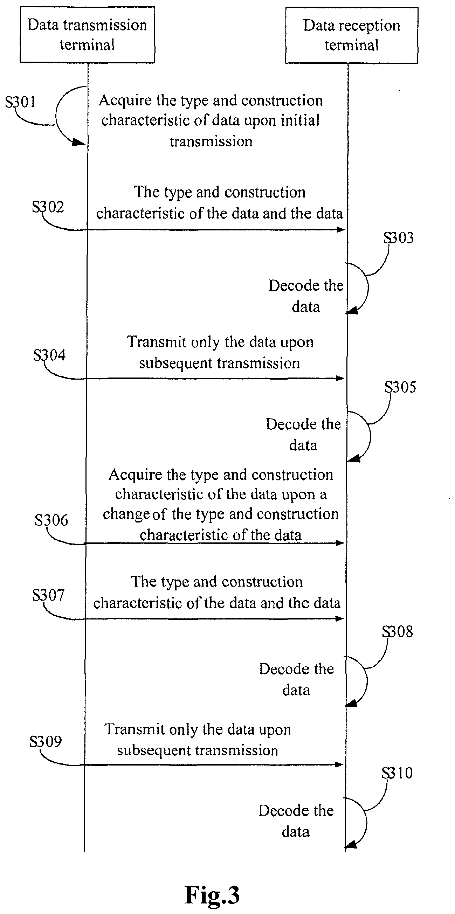

Reference is made to Fig.3 illustrating a data transmission method according to a second embodiment of the invention including the following specific steps:
Step S301. Upon initial transmission of data, a data transmission terminal acquires the type and construction information of the data. The data transmission terminal makes an analysis to acquire the type and construction information of data through an MP.
Step S302. The data transmission terminal encodes in the M language the type and construction information and the data for transmission to a data reception terminal.
Step S303. The data reception terminal receives the type and construction information and the data, decodes the type and construction information by the M language and decodes the data according to the type and construction information.
Step S304. Upon subsequent transmission of data, the data transmission terminal directly encodes the data in the M language for transmission to the data reception terminal without making analysis to acquire the type and construction information of the data.
Step S305. The data reception terminal decodes the received data according to the type and construction information by the M language.
Step S306. Upon detection of a change of the type and construction characteristic of the data, the data transmission terminal acquires the changed type and construction information.
Step S307. The data transmission terminal encodes in the M language the changed type and construction information and the data for transmission to a data reception terminal.
Step S308. The data reception terminal receives the changed type and construction information and the data, decodes the changed type and construction information by the M language, and decodes the data according to the changed type and construction information.
Step S309. Upon subsequent transmission of data, the data transmission terminal directly encodes the data in the M language for transmission to the data reception terminal without making analysis to acquire the type and construction information of the data.
Step S310. The data reception terminal decodes by the M language the received data according to the changed type and construction information.

Through the foregoing steps according to the invention, when the type and construction characteristic of the data is changed, the data transmission terminal acquires the changed type and construction information for transmission to the data reception terminal, and the data reception terminal decodes the subsequently received data according to the changed type and construction information. Thus, in the invention, the data transmission terminal and the data reception terminal can adapt to the transmission of data of constantly varying type and construction and can also ensure efficient transmission of the data.

Based on the foregoing data transmission method, the invention further provides a data transmission system which is mainly applicable to data transmission in the power industry and can transmit the data efficiently and rapidly.

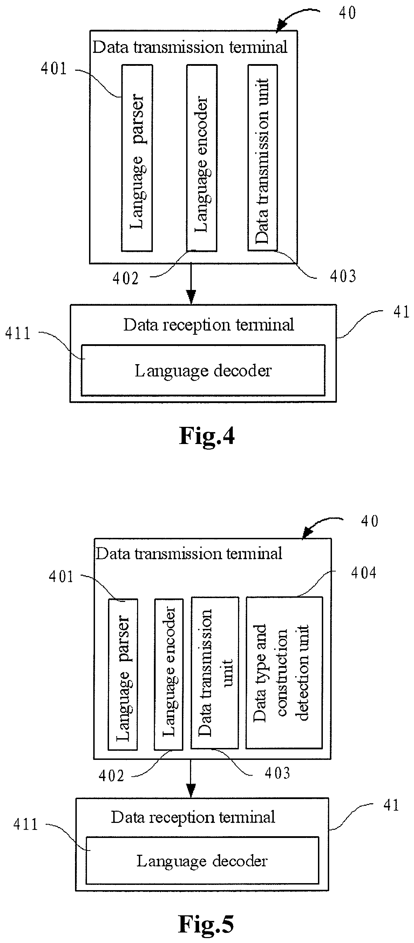

Reference is made to Fig.4 illustrating a structure of a data transmission system according to a first embodiment of the invention. The system includes a data transmission terminal 40 and a data reception terminal 41. The data transmission terminal 40 includes a language parser 401, a language encoder 402 and a data transmission unit 403. The data reception terminal 41 includes a language decoder 411.

Upon initial transmission of data, the language parser 401 acquires the type and construction information of the data, and transmits the type and construction information to the language encoder 402. The type and construction information includes the construction information of the data, name of transmitted argument, type and length information.

The language encoder 402 encodes the type and construction information and the data in the M language, and transmits the encoded type and construction information and the data to a data transmission unit 403.

The data transmission unit 403 transmits the encoded type and construction information and the data to the language decoder 411.

Upon subsequent transmission of data, the language encoder 402 directly encodes the data for transmission to the data transmission unit 403.

The data transmission unit 403 transmits the encoded data to the language decoder 411.

The language encoder 411 decodes the received data by the M language according to the type and construction information.

Thus, at the data transmission terminal, it is unnecessary to make an analysis to acquire the type and construction information of the data to thereby dispense with a significant workload of data compilation, save communication resources and reduce the time for processing the data. Also, the data transmitted subsequently by the data transmission terminal does not include the type and construction information of the data, causing the transmitted data packets to be relatively small to thereby facilitate rapid and efficient transmission of the data. At the data reception terminal, it is unnecessary to parse the type and construction information of the data and decode the data according to the type and construction information each time, but instead the received data can be decoded simply according to the initially received type and construction information to thereby dispense with a significant workload of data compilation, save communication resources and reduce the time for processing the data.

Reference is made to Fig.5 illustrating a structure of a data transmission system according to a second embodiment of the invention. The system includes a data transmission terminal 40 and a data reception terminal 41. The data transmission terminal 40 includes a language parser 401, a language encoder 402, a data transmission unit 403 and a data type and construction detection unit 404. The data reception terminal 41 includes a language decoder 411.

The data type and construction detection unit 404 initiates the M language parser 401 upon a change of the type and construction of the data. The language parser 401, the language encoder 402, the data transmission unit 403 and the M language decoder 411 encode, transmit and decode the data according to the changed type and construction information.

Based on the foregoing data transmission method and data transmission system, the invention further provides a data transmission terminal which is mainly applicable to the data transmission in the power industry and also can transmit the data efficiently and rapidly.

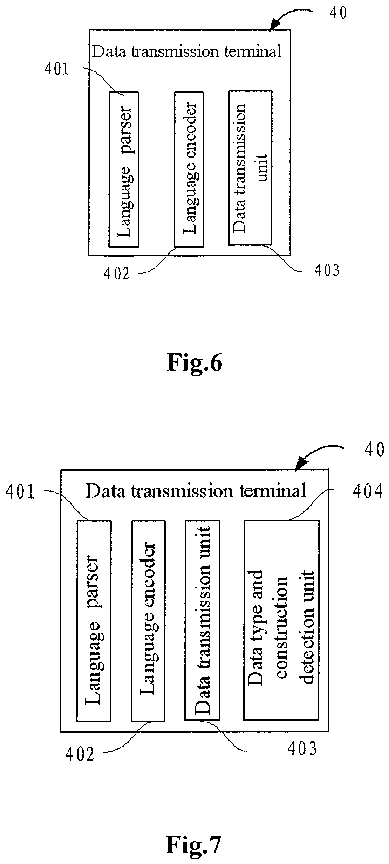

Reference is made to Fig.6 illustrating a structure of a data transmission terminal according to a first embodiment of the invention. The data transmission terminal 40 includes a language parser 401, a language encoder 402 and a data transmission unit 403.

Upon initial transmission of data, the language parser 401 acquires the type and construction information of the data and transmits the type and construction information to the language encoder 402. The type and construction information includes the construction information of the data, name of transmitted argument, type and length information.

The language encoder 402 encodes the type and construction information and the data in the M language and transmits the encoded type and construction information and data to the data transmission unit 403.

The data transmission unit 403 transmits the encoded type and construction information and the data to a data reception terminal.

Upon subsequent transmission of data, the language encoder 402 directly encodes the data for transmission to the data transmission unit 403.

The data transmission unit 403 transmits the encoded data to the data reception terminal.

Reference is made to Fig.7 illustrating a structure of a data transmission terminal according to a second embodiment of the invention. The data transmission terminal 40 includes a language parser 401, a language encoder 402, a data transmission unit 403 and a data type and construction detection unit 404.

The data type and construction detection unit 404 initiates the M language parser 401 upon a change of the type and construction of the data. The language parser 401, the language encoder 402, and the data transmission unit 403 encode and transmit the data according to the changed type and construction information.

A data transmission method and system and a data transmission terminal according to the invention have been detailed as above, the principle and embodiments of the invention have been set forth in specific examples in the context, and the foregoing descriptions of the embodiments are merely intended to facilitate understanding of the method according to the invention and the essence thereof.

## Claims

1. A power data transmission method, the method is **characterized by** comprising:
upon initial transmission of data, a data transmission terminal acquiring (S201) the type and construction information of the data, and encoding (S202) the type and construction information and the data for transmission to a data reception terminal, and the data reception terminal decoding (S203) the received type and construction information and the data; and
upon subsequent transmission of data, the data transmission terminal encoding (S204) only the data for transmission to the data reception terminal, and the data reception terminal decoding (S205) the received data according to the type and construction information received through the initial transmission.

2. The method according to claim 1, further comprising:
upon a change of the type and construction of the data, the data transmission terminal acquiring (S306) the changed type and construction information, and encoding (S307) the changed type and construction information and the data for transmission to the data reception terminal; and
the data reception terminal decoding (S308) the received data according to the changed type and construction information.

3. The method according to claim 1, wherein the data transmission terminal makes an analysis to construction characteristic of the data according to defined data type codes and data construction serial numbers to acquire the type and construction information of the data.

4. The method according to claim 1, wherein the type and construction information comprises the construction information of the data, the name of transmitted argument, the type and length information.

5. A power data transmission system, comprising a data transmission terminal (40) and a data reception terminal (41), wherein the data transmission terminal comprises a language parser (401), a language encoder (402) and a data transmission unit (403), and the data reception terminal (41) comprises a language decoder (411), the system is **characterized in that**:
the language parser (401) is adapted to acquire the type and construction information of data upon initial transmission of data;
the language encoder (402) is adapted to encode the type and construction information and the data upon initial transmission of data and encode the data upon subsequent transmission of data;
the data transmission unit (403) is adapted to transmit the encoded type and construction information and the data to the language decoder upon initial transmission of data and only transmit the encoded data to the language decoder upon subsequent transmission of data; and
the language decoder (411) is adapted to decode the received data according to the type and construction information received through the initial transmission.

6. The system according to claim 5, wherein the data transmission terminal (40) further comprises a data type and construction detection unit (404) for initiating the language parser upon a change of the type and construction of the data.

7. The system according to claim 5, wherein the type and construction information comprises the construction information of the data, the name of transmitted argument, the type and length information.

8. A power data transmission terminal, comprising a language parser (401), a language encoder (402) and a data transmission unit (403), the power data transmission terminal is **characterized in that**:
the language parser (401) is adapted to acquire the type and construction information of data upon initial transmission of data;
the language encoder (402) is adapted to encode the type and construction information and the data upon initial transmission of data and encode the data upon subsequent transmission of data; and
the data transmission unit (403) is adapted to transmit the encoded type and construction information and the data to a data reception terminal upon initial transmission of data and only transmit the encoded data to the data reception terminal upon subsequent transmission of data.

9. The data transmission terminal according to claim 8, wherein the data transmission terminal (40) further comprises a data type and construction detection unit (404) for initiating the language parser upon a change of the type and construction of the data.

10. The data transmission terminal according to claim 8, wherein the type and construction information comprises the construction information of the data, the name of transmitted argument, the type and length information.

## Patentansprüche

1. Verfahren zur Leistungsdatenübertragung, wobei das Verfahren **dadurch gekennzeichnet ist, dass** es umfasst, dass:
ein Datenübertragungsendgerät bei einer ersten Übertragung von Daten die Typ- und Aufbauinformationen der Daten beschafft (S201) und die Typ- und Aufbauinformationen und die Daten zur Übertragung an ein Datenempfangsendgerät codiert (S202), und das Datenempfangsendgerät die empfangenen Typ- und Aufbauinformationen und die Daten decodiert (S203); und
das Datenübertragungsendgerät bei einer anschließenden Übertragung von Daten nur die Daten zur Übertragung an das Datenempfangsendgerät codiert (S204) und das Datenempfangsendgerät die empfangenen Daten in Übereinstimmung mit den Typ- und Aufbauinformationen decodiert (S205), die es durch die erste Übertragung empfangen hat.

2. Verfahren nach Anspruch 1, das ferner umfasst, dass:
das Datenübertragungsendgerät bei einer Veränderung des Typs und des Aufbaus der Daten die veränderten Typ- und Aufbauinformationen beschafft (S306) und die veränderten Typ- und Aufbauinformationen und die Daten zur Übertragung an das Datenempfangsendgerät codiert (S307); und
das Datenempfangsendgerät die empfangenen Daten in Übereinstimmung mit den veränderten Typ- und Aufbauinformationen decodiert (S308).

3. Verfahren nach Anspruch 1,
wobei das Datenübertragungsendgerät eine Analyse der Aufbaueigenschaften der Daten in Übereinstimmung mit definierten Datentypcodes und Datenaufbauseriennummern durchführt, um die Typ- und Aufbauinformationen der Daten zu beschaffen.

4. Verfahren nach Anspruch 1,
wobei die Typ- und Aufbauinformationen die Aufbauinformationen der Daten, den Namen eines übertragenen Arguments, den Typ und Längeninformationen umfassen.

5. System zur Leistungsdatenübertragung, das ein Datenübertragungsendgerät (40) und ein Datenempfangsendgerät (41) umfasst, wobei das Datenübertragungsendgerät eine Sprachanalysevorrichtung (401), einen Sprachcodierer (402) und eine Datenübertragungseinheit (403) umfasst, und das Datenempfangsendgerät (41) einen Sprachdecodierer (411) umfasst, wobei das System **dadurch gekennzeichnet ist, dass**:
die Sprachanalysevorrichtung (401) angepasst ist, um die Typ- und Aufbauinformationen von Daten bei einer ersten Übertragung der Daten zu beschaffen;
der Sprachcodierer (402) angepasst ist, um die Typ- und Aufbauinformationen der Daten bei der ersten Übertragung der Daten zu codieren, und um die Daten bei einer anschließenden Übertragung von Daten zu codieren;
die Datenübertragungseinheit (403) angepasst ist, um die codierten Typ- und Aufbauinformationen und die Daten bei einer ersten Übertragung von Daten an den Sprachdecodierer zu übertragen, und um bei einer anschließenden Übertragung von Daten nur die codierten Daten an den Sprachdecodierer zu übertragen; und
der Sprachdecodierer (411) angepasst ist, um die empfangenen Daten in Übereinstimmung mit den Typ- und Aufbauinformationen, die er durch die erste der Übertragung empfangen hat, zu decodieren.

6. System nach Anspruch 5,
wobei das Datenübertragungsendgerät (40) eine Einheit (404) zum Detektieren des Datentyps und des Datenaufbaus umfasst, um die Sprachanalysevorrichtung bei einer Änderung des Typs und des Aufbaus der Daten zu initialisieren.

7. System nach Anspruch 5,
wobei die Typ- und Aufbauinformationen die Aufbauinformationen der Daten, den Namen eines übertragenen Arguments, der Typ und Längeninformationen umfasst.

8. Endgerät zur Leistungsdatenübertragung, das eine Sprachanalysevorrichtung (401), einen Sprachcodierer (402) und eine Datenübertragungseinheit (403) umfasst, wobei das Endgerät zur Leistungsdatenübertragung **dadurch gekennzeichnet ist, dass**:
die Sprachanalysevorrichtung (401) angepasst ist, um die Typ- und Aufbauinformationen von Daten bei einer ersten Übertragung der Daten zu beschaffen;
der Sprachcodierer (402) angepasst ist, um die Typ- und Aufbauinformationen und die Daten bei der ersten Übertragung der Daten zu codieren und um die Daten bei einer anschließenden Übertragung der Daten zu codieren; und
die Datenübertragungseinheit (403) angepasst ist, um die codierten Typ- und Aufbauinformationen und die Daten an ein Datenempfangsendgerät bei der ersten Übertragung von Daten zu übertragen, und um bei einer anschließenden Übertragung der Daten nur die codierten Daten an das Datenempfangsendgerät zu übertragen.

9. Endgerät zur Leistungsdatenübertragung nach Anspruch 8,
wobei das Endgerät (40) zur Leistungsdatenübertragung ferner eine Einheit (404) zum Detektieren des Datentyps und des Datenaufbaus umfasst, um die Sprachanalysevorrichtung bei einer Änderung des Typs und des Aufbaus der Daten zu initialisieren.

10. Endgerät zur Leistungsdatenübertragung nach Anspruch 8,
wobei die Typ- und Aufbauinformationen die Aufbauinformationen der Daten, den Namen eines übertragenen Arguments, den Typ und Längeninformationen umfassen.

## Revendications

1. Procédé de transmission de données de puissance, le procédé étant **caractérisé en ce qu'**il comprend :
lors d'une transmission initiale de données, l'acquisition (S201), par un terminal de transmission de données, d'informations de type et de construction des données, et le codage (S202) des informations de type et de construction et des données pour la transmission à un terminal de réception de données, et le décodage (S203), par le terminal de réception de données, des informations de type et de construction et des données reçues ; et
lors d'une transmission subséquente de données, le codage (S204), par le terminal de transmission de données, uniquement des données pour la transmission au terminal de réception de données, et le décodage (S205), par le terminal de réception de données, des données reçues en fonction des informations de type et de construction reçues par l'intermédiaire de la transmission initiale.

2. Procédé selon la revendication 1, comprenant en outre :
lors d'un changement du type et de construction des données, l'acquisition (S306), par le terminal de transmission de données, des informations de type et de construction changées, et le codage (S307) des informations de type et de construction changées et des données pour la transmission au terminal de réception de données ; et
le décodage (S308), par le terminal de réception de données, des données reçues en fonction des informations de type et de construction changées.

3. Procédé selon la revendication 1, dans lequel le terminal de transmission de données effectue une analyse sur une caractéristique de construction des données à partir de codes de type de données définis et de numéros de série de construction de données définis pour acquérir les informations de type et de construction des données.

4. Procédé selon la revendication 1, dans lequel les informations de type et de construction comprennent les informations de construction des données, le nom d'argument transmis, les informations de type et de longueur.

5. Système de transmission de données de puissance, comprenant un terminal de transmission de données (40) et un terminal de réception de données (41), dans lequel le terminal de transmission de données comprend un analyseur de langage (401), un codeur de langage (402) et une unité de transmission de données (403), et le terminal de réception de données (41) comprend un décodeur de langage (411), le système étant **caractérisé en ce que** :
l'analyseur de langage (401) est adapté pour acquérir les informations de type et de construction de données lors d'une transmission initiale de données ;
le codeur de langage (402) est adapté pour coder les informations de type et de construction et les données lors d'une transmission initiale de données et coder les données lors d'une transmission subséquente de données ;
l'unité de transmission de données (403) est adaptée pour transmettre les informations de type et de construction et les données codées au décodeur de langage lors d'une transmission initiale de données et transmettre uniquement les données codées au décodeur de langage lors d'une transmission subséquente de données ; et
le décodeur de langage (411) est adapté pour décoder les données reçues en fonction des informations de type et de construction reçues par l'intermédiaire de la transmission initiale.

6. Système selon la revendication 5, dans lequel le terminal de transmission de données (40) comprend en outre une unité de détection de type et de construction de données (404) pour démarrer l'analyseur de langage lors d'un changement du type et de la construction des données.

7. Système selon la revendication 5, dans lequel les informations de type et de construction comprennent les informations de construction des données, le nom d'argument transmis, les informations de type et de longueur.

8. Terminal de transmission de données de puissance, comprenant un analyseur de langage (401), un codeur de langage (402) et une unité de transmission de données (403), le terminal de transmission de données de puissance étant **caractérisé en ce que** :
l'analyseur de langage (401) est adapté pour acquérir les informations de type et de construction de données lors d'une transmission initiale de données ;
le codeur de langage (402) est adapté pour coder les informations de type et de construction et les données lors d'une transmission initiale de données et coder les données lors d'une transmission subséquente de données ; et
l'unité de transmission de données (403) est adaptée pour transmettre les informations de type et de construction et les données codées à un terminal de réception de données lors d'une transmission initiale de données et transmettre uniquement les données codées au terminal de réception de données lors d'une transmission subséquente de données.

9. Terminal de transmission de données selon la revendication 8, le terminal de transmission de données (40) comprenant en outre une unité de détection de type et de construction de données (404) pour démarrer l'analyseur de langage lors d'un changement du type et de la construction des données.

10. Terminal de transmission de données selon la revendication 8, dans lequel les informations de type et de construction comprennent les informations de construction des données, le nom d'argument transmis, les informations de type et de longueur.
